# NEUE EUROPÄISCHE PATENTSCHRIFT

(11) **EP 0 106 328 B2**
(45) Veröffentlichungstag und Bekanntmachung des Hinweises auf die Entscheidung über den Einspruch: **11.05.1994**
(45) Hinweis auf die Patenterteilung: 06.07.1988
(21) Anmeldenummer: 83110239.7
(22) Anmeldetag: 13.10.1983
(51) Int. Cl.: B32B 27/12

(54) **Rohrförmiges Isoliermaterial**
Tubular insulating material
Matériau isolant sous forme tubulaire

(30) Priorität: 14.10.1982 DE 8228886 U
(43) Veröffentlichungstag der Anmeldung: 25.04.1984
(73) Patentinhaber: E. Missel GmbH & Co., D-70374 Stuttgart (DE)
(72) Erfinder: Ruoff-Schäfer, Rudolf, D-7000 Stuttgart 50 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- DE-A- 2 336 532
- DE-A- 2 541 964
- DE-A- 2 616 537
- DE-C- 2 532 406
- DE-U- 7 621 892
- DE-U- 7 922 200
- FR-A- 2 078 360

## Beschreibung

Die Erfindung betrifft ein rohrförmiges Isoliermaterial, bestehend aus einem Verbund aus geschlossenzelligem Schaumstoff, einer Folie und einer netzartigen Schutzstruktur.

Derartige rohrförmige Isoliermaterialien werden im großen Umfange zum Isolieren von metallischen Rohren verwendet.

Da solche rohrförmigen Isoliermaterialien im rauhen Baustellenbereich erheblichen Belastungen und Beschädigungsgefahren ausgesetzt sein können und häufig auch ausgesetzt sind, kommt es immer wieder vor, daß in den Isoliermaterialien Risse und Schlitze entstehen, die auch die Isoliereigenschaften beeinträchtigen und vor allem die Tendenz haben, weiterzureißen und damit das jeweilige Isoliermaterial unbrauchbar zu machen.

Aus der DE-A-26 16 537 sind verstärkte Platten aus thermoplastischem Schaum bekannt, die für Matratzen, Matratzenkanten, Kissen zum Schlafen und für Umschläge für den Postversand bestimmt sind. Diese aus mehreren Schichten bestehenden Platten können zwischen zwei Schichten eine netzähnliche Struktur zur Verstärkung des Verbundmaterials aufweisen. Eine Anpassung dieses Plattenmaterials an einen zu umschließenden Körper ist dabei nicht vorgesehen.

Aufgabe der Erfindung ist es, ein rohrförmiges Isoliermaterial der eingangs angegebenen Art so auszubilden, daß bei vernachlässigbarem Mehraufwand die Festigkeit entscheidend erhöht und die Gefahr einer unkontrollierten Rißbildung im Isoliermaterial völlig ausgeschaltet wird.

Gelöst wird diese Aufgabe nach der Erfindung dadurch, daß in Streifenform vorliegender Schaumstoff zu einem Rohr geformt ist, daß in die auf den Schaumstoff aufkaschierte und den Schaumstoff umschließende Folie ein Fadengitter aus Polyester- oder Glasfaser intergriert ist, und daß die rechteckigen, parallelogrammartigen oder rautenförmigen Einzelfelder der Gitterstruktur bei extremen Belastungen in Form von Schlägen, Quetschvorgängen und dergleichen kleinflächige Rissbegrenzungsbereiche bilden.

Vorteilhafte Ausführungsformen der Erfindung sind in Unteransprüchen beschrieben.

Durch die Kombination einer Netzstruktur mit der Folie wird indirekt auch die Folienfestigkeit erhöht, da Überdehnungen in Teilbereichen weitestgehend ausgeschlossen werden.

Selbst unter härtesten Baustellenbedingungen und bei unvorsichtiger Handhabung dieses in Schlauchform vorliegenden Isoliermaterials sind die Beschädigungsgefahren absolut minimiert.

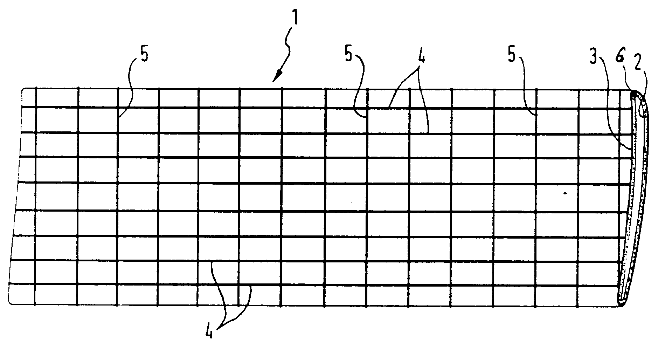

Ein Ausführungsbeispiel der Erfindung wird in Verbindung mit der Zeichnung näher erläutert; die einzige Figur der Zeichnung zeigt einen Abschnitt eines rohrförmigen Isoliermaterials nach der Erfindung.

Der mit dem allgemeinen Bezugszeichen 1 gekennzeichnete Isolierschlauch besteht aus einer geschlossenzelligen Schaumstoffschicht 2, die mit einer Kunststoffolie 3 kaschiert ist.

Auf die Folie 3 ist eine Gitterstruktur aus im wesentlichen senkrecht zueinander verlaufenden Fäden 4, 5 aufgebracht. Vorzugsweise sind diese aus Polyesterfasern oder aus Glasfasern bestehenden Fäden mit der Kunststoffolie 3 verschweißt oder verklebt, so daß diese Gitterstruktur die Festigkeit der Schaumstoffumhüllung bzw. der den Schaumstoff umschließenden Folie erhöhen kann.

Sollte durch extreme Belastungen, Schläge, Quetschvorgänge oder dergleichen die Gefahr von Rißbildungen in der Folie 3 auftreten, so werden die Maximalausdehnungen eines eventuellen Risses auf ein Gitterelement beschränkt, da die Gitterfäden jeglichen Effekt des ansonsten vorhandenen Weiterreißens unterbinden. Als Gitterfäden eignen sich alle Materialien von ausreichend hoher Reiß- bzw. Zugfestigkeit, die mit der Kunststoffolie auf einfache Weise dauerhaft verbunden werden können.

Im dargestellten Ausführungsbeispiel verlaufen die Fäden der Gitterstruktur parallel zur Schlauchachse bzw. senkrecht dazu in Umfangsrichtung des Schlauches. Dies ist ein bevorzugtes Ausführungsbeispiel, schränkt aber die Erfindung nicht auf diese spezielle Struktur ein.

Anstelle einer Gitterstruktur mit im wesentlichen rechteckigen Einzelfeldern kann auch eine Gitterstruktur mit parallelogrammartigen oder rautenförmigen Einzelfeldern Verwendung finden.

## Patentansprüche

1. Rohrförmiges Isoliermaterial, bestehend aus einem Verbund aus geschlossenzelligem Schaumstoff (2), einer Folie (3) und einer netzartigen Schutzstruktur (4, 5), dadurch gekennzeichnet, daß in Streifenform vorliegender Schaumstoff (2) zu einem Rohr (1) geformt ist, daß in die auf den Schaumstoff (2) aufkaschierte und den Schaumstoff (2) umschließende Folie (3) ein Fadengitter (4, 5) aus Polyester- oder Glasfaser integriert ist, und daß die rechteckigen, parallelogrammartigen oder rautenförmigen Einzelfelder der Gitterstruktur bei extremen Belastungen in Form von Schlägen, Quetschvorgängen und dergleichen kleinflächige Rissbegrenzungsbereiche bilden.

2. Rohrförmiges Isoliermaterial nach Anspruch 1, dadurch gekennzeichnet, daß das Fadengitter (4, 5) zwischen der Folie (3) und der Schaumstoffschicht (2) angeordnet ist.

3. Rohrförmiges Isoliermaterial nach Anspruch 1, dadurch gekennzeichnet, daß das Fadengitter (4, 5) an der Außenseite der Folie (3) angeracht ist.

4. Rohrförmiges Isoliermaterial nach Anspruch 3, dadurch gekennzeichnet, daß das Fadengitter (4, 5) mit der Folie (3) verklebt oder verschweißt ist.

5. Rohrförmiges Isoliermaterial nach einem der vorhergehenden Ansprüche, dadurch gekennzeichnet, daß der gegenseitige Abstand der Fäden (4, 5) im Bereich von 5 bis 10 mm gelegen ist.

## Claims

1. Tubular insulating material comprising a composite of closed cell foam material (2), of a foil (3) and of a net-like protection structure (4, 5),
**characterized** in that foam material (2) present in strip form is formed into a tube (1); in that a grid of threads (4, 5) of polyester fibres or glass fibres is integrated into the foil (3) which is laminated onto the foam material (2) and surrounds the foam material (2); and in that the rectangular, parallelogram shaped or rhomboidal individual fields of the grid structure form small area, tear restricting, regions under extreme loads in the form of blows, crushing processes and the like.

2. Tubular insulating material in accordance with claim 1, characterised in that the grid of threads (4,5) is arranged between the foil (3) and the foam material layer (2).

3. Tubular insulating material in accordance with claim 1, characterised in that the grid of threads (4, 5) is attached to the outer side of the foil (3).

4. Tubular insulating material in accordance with claim 3, characterised in that the grid of threads (4, 5) is adhesively bonded or welded to the foil (3).

5. Tubular insulating material in accordance with one of the preceding claims, characterised in that the mutual spacing of the threads (4, 5) is disposed in the range from 5 to 10 mm.

## Revendications

1. Matériau isolant sous forme tubulaire,constitué d'une combinaison de mousse cellulaire à cellules fermées (2), d'une feuille (3) et d'une structure de protection (4,5) ayant la nature d'un réseau, caractérisé en ce que la mousse (2) se présentant sous forme de bande est façonnée en forme d'un tube (l),en ce qu'à la feuille (3) plaquée sur la mousse (2) et entourant la mousse (2) est intégré un treillis de fils (4,5) en fibres de polyester ou de verre, et en ce que les mailles de la structure en treillis, qui ont la forme de rectangles, de parallélogrammes ou de losanges, forment en présence de sollicitations extrêmes sous forme de chocs, pincements ou analogues, des zones de petite surface limitant la fissuration.

2. Matériau isolant sous forme tubulaire selon la revendication 1, caractérisé en ce que le treillis de fils (4,5) est placé entre la feuille (3) et la couche de mousse (2).

3. Matériau isolant sous forme tubulaire selon la revendication 1, caractérisé en ce que le treillis de fils (4,5) est placé à l'extérieur de la feuille (3).

4. Matériau isolant sous forme tubulaire selon la revendication 3, caractérisé en ce que le treillis de fils (4,5) est collé ou soudé sur la feuille (3).

5. Matériau isolant sous forme tubulaire selon l'une ou l'autre des revendications précédentes, caractérisé en ce que la distance entre les fils (4,5) est de l'ordre de 5 à 10 mm.
